# FASCICULE DE BREVET EUROPEEN

(11) **EP 1 741 069 B1**
(45) Date de publication et mention de la délivrance du brevet: **14.11.2007**
(21) Numéro de dépôt: 05717063.1
(22) Date de dépôt: 16.03.2005
(51) Int. Cl.: G07C 9/00

(54) **PROCEDE DE COMDAMNATION AUTOMATIQUE D'OUVRANTS D'UN VEHICULE AUTOMOBILE**
VERFAHREN ZUR AUTOMATISCHEN SPERRUNG VON ÖFFNUNGEN BEI EINEM KRAFTFAHRZEUG
METHOD FOR AUTOMATICALLY BLOCKING OPENINGS IN A MOTOR VEHICLE

(30) Priorité: 29.03.2004 FR 0403233
(43) Date de publication de la demande: 10.01.2007
(73) Titulaire: VALEO SECURITE HABITACLE S.A.S., 94042 Créteil Cédex (FR)
(72) Inventeur: RANIER, Marc, VALEO SECURITE HABITACLE, F94042 Créteil Cedex (FR); ROBINEAU, José, VALEO SECURITE HABITACLE, F-94042 Créteil Cedex (FR); MOLIN, Patrick, VALEO SECURITE HABITACLE, F-94042 Créteil Cedex (FR)
(86) Numéro de dépôt international: PCT/EP2005/051194
(87) Numéro de publication internationale: WO 2005/106804

(56) Documents cités:
- DE-C- 19 642 017
- FR-A- 2 837 014
- FR-A- 2 839 031

## Description

La présente invention concerne un procédé de condamnation automatique des ouvrants d'un véhicule automobile équipé d'un système mains libres comportant un dispositif d'identification situé sur le véhicule et un dispositif identifiant portatif. L'invention a notamment pour but de limiter la durée d'un tel procédé.

Le système mains libres permet à une personne munie d'un dispositif identifiant correspondant à un véhicule de pénétrer à l'intérieur de ce véhicule. En effet, un élément déclenchant, tel que la présence d'une main sur une poignée détectée par un capteur, associée à la détection de la présence du dispositif identifiant peut engendrer un déverrouillage des portes du véhicule. Par ailleurs, lorsque la personne munie du dispositif identifiant portatif correspondant au véhicule arrête le moteur du véhicule et s'en éloigne d'une certaine distance, il est connu de condamner automatiquement l'accès au véhicule et de mettre en veille les circuits électroniques de ce véhicule.

Le dispositif d'identification comporte un émetteur radiofréquence capable d'émettre des signaux d'interrogation vers le dispositif identifiant et un récepteur radiofréquence capable de recevoir des signaux de réponse émis par le dispositif identifiant. Le dispositif identifiant comporte un émetteur et un récepteur radiofréquence capables respectivement d'émettre les signaux de réponse et de recevoir les signaux d'interrogation. Ces signaux d'interrogation et de réponse sont émis sur une certaine bande de fréquence.

Pour réaliser une condamnation du véhicule, le dispositif d'identification envoie périodiquement, dans une phase d'émission périodique, les signaux d'interrogation qui couvrent une zone de recherche donnée. Si le dispositif identifiant se situe dans la zone de recherche, ce dispositif détecte les signaux d'interrogation et envoie en retour des signaux de réponse. Ainsi, lorsqu'un signal de réponse est détecté par le dispositif d'identification, la présence d'un utilisateur autorisé situé à proximité du véhicule est validée et on ne condamne donc pas les ouvrants du véhicule.

En revanche, dès qu'une disparition du dispositif identifiant est détectée, c'est à dire dès qu'un signal de réponse correspondant à un signal d'interrogation n'est pas détecté par le dispositif d'identification, le dispositif identifiant est réputé absent. Les ouvrants du véhicule peuvent alors être condamnés et ses systèmes et circuits électroniques mis en veille. Dans certaines mises en oeuvre connues, on peut, après avoir détecté une disparition du dispositif identifiant, entrer dans une phase de validation de la disparition du dispositif identifiant, dans laquelle les signaux d'interrogation sont émis de manière plus occurrente que dans la phase d'émission périodique.

On connaît le document FR-2837014 qui décrit un procédé dans lequel le dispositif d'identification détecte un événement déclenchant parmi un ensemble prédéterminé de ces éléments. A la suite de cette détection, un test préliminaire est exécuté et en fonction du résultat de ce test, une émission de signaux d'interrogation est réalisée.

Toutefois, ce procédé présente des limites. En effet, dans ce procédé, on ne tient pas compte d'un niveau des signaux environnants le véhicule. Or ces signaux peuvent perturber tant l'émission que la réception des signaux d'interrogation et de réponse mis en jeu. Cette perturbation peut conduire à des condamnations intempestives du véhicule.

En effet, lorsqu'aucun signal de réponse n'est détecté par le dispositif d'identification, on peut décider une condamnation du véhicule alors que cette absence de détection de signal est uniquement due à des signaux électromagnétiques environnants qui polluent et perturbent notamment la réception des signaux de réponse. Un véhicule pourrait alors être verrouillé alors qu'un utilisateur muni du dispositif identifiant se trouverait dans la zone de recherche du véhicule.

L'invention se propose donc notamment de résoudre ce problème de condamnation intempestive dû à des signaux environnants.

A cet effet, dans l'invention, un niveau des signaux environnants est mesuré et comparé à un seuil prédéterminé. En fonction de cette comparaison et du signal de réponse reçu, on prend alors la décision de condamner ou non le véhicule automobile.

Ainsi, si une disparition du dispositif identifiant est détectée et que le niveau des signaux environnants est très bas, le véhicule peut être condamné très rapidement. En revanche, si une disparition du dispositif identifiant est détectée et que le niveau des signaux environnants est supérieur au seuil prédéterminé, la condamnation du véhicule doit être différée.

Dans une mise en oeuvre particulière, des signaux d'interrogation peuvent être émis à nouveau jusqu'à ce que le niveau des signaux environnants soit assez bas pour qu'une absence de détection des signaux de réponse correspondent effectivement à une non réponse du dispositif identifiant donc à un éloignement de celui-ci.

L'invention concerne donc un procédé de condamnation automatique des ouvrants d'un véhicule 100 automobile équipé d'un système mains-libres comprenant un dispositif 101 d'identification situé sur le véhicule et un dispositif 102 identifiant portatif, le procédé comportant les étapes suivantes :
- on émet avec le dispositif d'identification des premiers signaux I d'interrogation électromagnétiques à destination du dispositif identifiant portatif, ces signaux étant détectables dans une zone Z donnée de recherche, puis
- on condamne les ouvrants du véhicule lorsque aucun signal R de réponse électromagnétique émis par le dispositif identifiant n'est détecté par le dispositif 101 d'identification,
caractérisé en ce que
- le dispositif 101 d'identification mesure un niveau de signaux E électromagnétiques environnants, et
- on décide de condamner ou non les ouvrants du véhicule en fonction de cette mesure.

L'invention sera mieux comprise à la lecture de la description qui suit et à la vue des figures qui l'accompagnent. Ces figures montrent:
Figure 1 : une représentation d'un véhicule automobile équipé d'un système mains-libres;
Figure 2 : un diagramme d'une procédure d'émission-réception dans laquelle une mesure des signaux environnants est réalisée;
Figure 3 : un diagramme de temps représentant des durées de travail des différents émetteurs et récepteur du système mains-libres;
Figure 4 : un diagramme d'une mise en oeuvre particulière du procédé selon l'invention.

Les éléments communs à différentes figures possèdent la même référence d'une figure à l'autre.

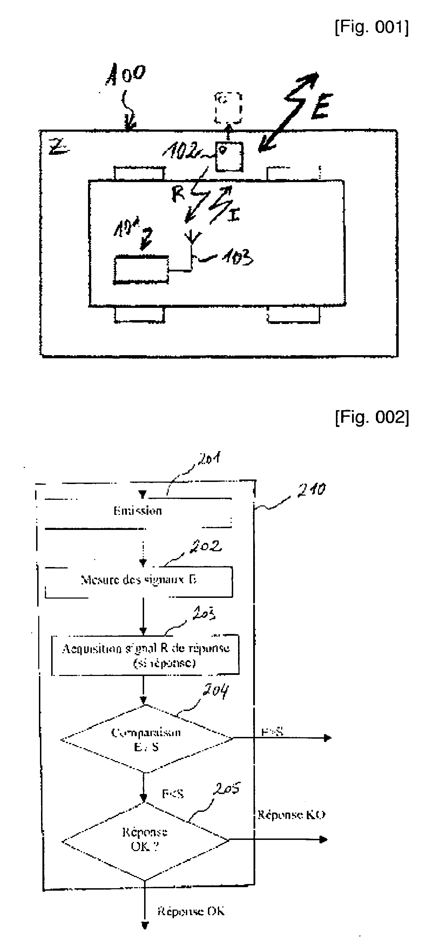

La figure 1 montre un véhicule 100 automobile comportant un système dit mains-libres. Ce système mains-libres comporte un dispositif 101 d'identification situé à l'intérieur du véhicule 100 et un dispositif 102 identifiant portatif situé ici à l'extérieur du véhicule, dans une zone de recherche Z. Le dispositif 101 d'identification et le dispositif 102 identifiant communiquent entre eux en échangeant des signaux d'interrogation I et de réponse R électromagnétiques.

Des signaux E électromagnétiques environnants correspondant à des signaux électromagnétiques autres que les signaux I d'interrogation et les signaux R de réponse sont détectables aux alentours du véhicule 100. Ces signaux E électromagnétiques environnants peuvent perturber la communication entre le dispositif 101 d'identification et le dispositif 103 identifiant.

Plus précisément, le dispositif 101 d'identification émet par l'intermédiaire d'une antenne 103 des signaux I d'interrogation. Les signaux d'interrogation I sont détectables par le dispositif 103 identifiant dans une zone de recherche Z donnée. En effet, dans cette zone Z de recherche, un récepteur du dispositif 103 identifiant comportant une certaine sensibilité est capable de détecter les signaux I d'interrogation qui sont supérieurs à un seuil de détection de ce récepteur.

Ainsi, dans le cas où le dispositif 102 identifiant se situe à l'intérieur de la zone Z de recherche, le dispositif 102 identifiant détecte les signaux I d'interrogation et envoie en retour des signaux R de réponse. Le véhicule ne doit donc pas être condamné. En revanche, lorsque le dispositif 102 d'identifiant sort de la zone Z de recherche, il n'envoie plus de signal R de réponse pour signifier sa présence. On peut alors décider une condamnation automatique du véhicule 100.

Toutefois, conformément à l'invention, pour s'assurer que cette absence de détection de signal R de réponse n'est pas due à un niveau trop important des signaux E environnants, on mesure à l'aide d'un capteur le niveau des signaux E environnants.

Le niveau de ces signaux E environnants est alors comparé à un seuil S de perturbation. Si le niveau des signaux E environnants est inférieur au seuil S de perturbation et qu'aucun signal R de réponse correspondant à un signal 1 d'interrogation émis n'est détecté, cela signifie que le dispositif 103 identifiant est effectivement sorti de la zone Z de recherche. La condamnation du véhicule peut alors être décidée rapidement et de manière certaine.

Dans le cas contraire, si aucun signal R de réponse n'est reçu et que le niveau des signaux E environnants est supérieur au seuil S de perturbation, aucune décision de condamner le véhicule 100 ne peut être prise. On peut donc décider de ne pas condamner les ouvrants du véhicule 100, de différer celle-ci, de reprendre le procédé à l'étape initiale ou encore de faire agir toute autre fonction permettant à l'utilisateur de connaître l'état du véhicule et du milieu environnant.

La mesure du niveau des signaux E environnants est réalisée par le dispositif 101 d'identification.

La figure 2 montre une procédure 210 d'émission-réception possible pour la mise en oeuvre dans l'invention. Dans cette procédure 210, on réalise notamment une étape 202 de mesure d'un niveau des signaux E environnants et en fonction du niveau mesuré, on décide de sortir ou non de cette procédure.

Plus précisément, dans une première étape 201 de la procédure d'émission-réception, le dispositif 101 d'identification émet un signal I d'interrogation à destination du dispositif 102 identifiant. Dans une deuxième étape 202, un niveau des signaux E environnants correspondant à un bruit ambiant est mesuré. Dans une troisième étape 203, un signal R de réponse éventuel est détecté par le dispositif d'identification.

Il existe un synchronisme entre l'émission des signaux I d'interrogation, la mesure du niveau des signaux E environnants et la réception éventuelle d'un signal R de réponse. En effet, après avoir émis un signal d'interrogation, on connaît globalement à quel moment un signal R de réponse émis par le dispositif et correspondant au signal I émis devrait être détecté par le dispositif 101 d'identification. Dans une mise en oeuvre particulière, la mesure qui possède elle-même une certaine durée peut donc être effectuée, comme explicité dans la figure 2, pendant l'attente du signal R de réponse éventuel.

Dans une quatrième étape 204, on compare le niveau mesuré des signaux E environnants à un seuil S de perturbation correspondant à un niveau de signaux E environnants au-delà duquel une communication radiofréquence peut être perturbée. Plus précisément, ce seuil S correspond à un niveau au delà duquel les signaux E environnants sont susceptibles d'avoir une influence sur la réception et / ou l'émission des signaux d'interrogation et de réponse.

Ainsi, dans l'étape 204, si le niveau des signaux E environnants est supérieur au seuil S alors on sort de la procédure 210. En revanche si le niveau des signaux E environnants est inférieur, on passe à une étape 205 dans laquelle on teste si un signal R de réponse est détecté par le dispositif 101 d'identification.

Si aucun signal R de réponse n'est détecté alors on peut sortir de la procédure 210 et passer à une autre étape. Si un signal R de réponse est détecté par le dispositif 101 d'identification, on peut alors sortir de la procédure 210 et passer à une autre étape. En général la détection et la non détection d'un signal de réponse mènent à deux étapes différentes et distinctes l'une de l'autre.

Dans une mise en oeuvre particulière, si un signal R de réponse est détecté à l'issue de l'étape 205, on peut reboucler l'étape 205 avec la première étape 201. On peut alors définir une période qui sépare deux émissions successives d'un signal I d'interrogation, de manière à ce que ces signaux I d'interrogation soient émis périodiquement.

Dans la mise en oeuvre de la procédure représentée, les deux étapes 204 et 205 de test sont distinctes l'une de l'autre. Toutefois, ces étapes 204 et 205 peuvent être réalisées communément dans une seule et même étape de test non représentée. Quatre résultats de test peuvent alors être observés en sortie de cette étape commune de test. En effet, un premier résultat de test: pas de signal R de réponse détecté et un niveau des signaux E environnants inférieur au seuil S de perturbation, un deuxième résultat de test: pas de signal R de réponse détecté et un niveau des signaux E environnants supérieur au seuil S de perturbation, un troisième résultat de test: un signal R de réponse détecté et un niveau des signaux E environnants inférieur au seuil S de perturbation et un quatrième résultat de test: un signal R de réponse détecté et un niveau des signaux E environnants supérieur au seuil S de perturbation peuvent permettre de sortir de la procédure 210 d'émission afin de passer à des étapes particulières.

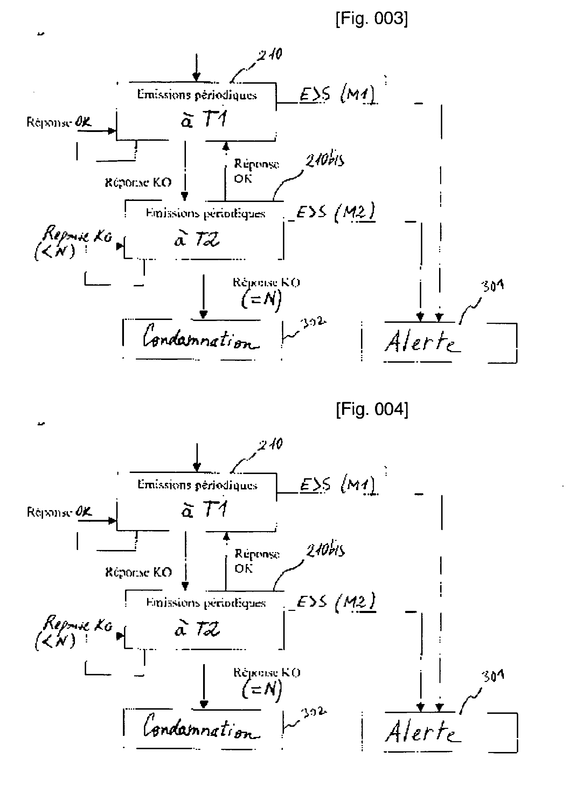

La figure 3 montre les temps de travail des émetteurs et des récepteurs du dispositif mains-libres observés pendant le déroulement d'une procédure d'émission-réception possible pour la mise en oeuvre de l'invention. Pendant ces temps de travail, les émetteurs et les récepteurs émettent, reçoivent ou traitent des signaux.

Plus précisément, un émetteur EV du dispositif 101 d'identification émet les signaux I d'interrogation sur une durée TA.

Un récepteur RID du dispositif 103 identifiant reçoit et traite les signaux d'émission sur une durée TC.

Après ce traitement, un émetteur EID du dispositif 103 identifiant émet un signal R de réponse sur une durée TD.

Ce signal R de réponse est ensuite reçu et traité par le récepteur RV du dispositif 101 d'identification sur une durée TE.

L'ensemble de ces échanges de signaux se produit sur une durée TB qui caractérise un période d'émission-réception du système mains-libres.

Dans une procédure d'émission-réception, la mesure du niveau des signaux E environnants peut être, selon une mise en oeuvre de l'invention, réalisée pendant la durée TC correspondant l'intervalle de temps qui sépare les émissions des dispositifs 101 et 103, respectivement d'identification et identifiant. Autrement dit, cette mesure du niveau des signaux E environnants est réalisée entre l'émission des signaux I d'interrogation sur la durée TA et celle des signaux R de réponse sur la durée TD, soit entre deux phases d'émission. On est ainsi sûr de ne mesurer que des signaux E environnants autres que les signaux d'interrogation et de réponse, ces derniers n'étant pas émis.

En outre, comme l'étape de mesure des signaux E environnants est réalisée en parallèle avec le traitement du signal R de réponse, l'étape de mesure ne pénalise pas d'un point de vue temporel la communication entre le dispositif 101 d'identification et le dispositif 102 identifiant. L'étape de mesure 202 ne rallonge donc en aucun cas la durée du procédé de condamnation du véhicule.

En variante, on peut imaginer que le niveau des signaux E environnants est mesuré pendant une phase d'émission. On pourrait alors, connaissant un niveau d'un signal émis, déduire le niveau des signaux E environnants en soustrayant le niveau connu du signal émis à un niveau global des signaux mesurés.

Le niveau des signaux E environnants peut être mesuré après chaque envoi d'un signal E d'émission. En variante, ce niveau est mesuré uniquement dès que la disparition du dispositif 103 identifiant est détectée par le dispositif 101 d'identification.

La figure 4 montre une représentation graphique d'une mise en oeuvre particulière du procédé de condamnation selon l'invention établie à partir de deux procédures 210 et 210bis d'émission-réception de la figure 2. Ainsi on remarque que trois conditions permettent de sortir de chacune des deux procédures 210 et 210bis mises en oeuvre.

Dans un état initial, dans une première procédure 210 d'émission-réception, les signaux I d'interrogations sont émis périodiquement une première période T1 séparant deux émissions successives. Cette première procédure correspond à une phase d'émission périodique des signaux I d'interrogation.

Si un signal R de réponse est détecté alors on retourne à la première étape 201 de la procédure 210 d'émission.

Si lors de M1 émissions de signaux I d'interrogation, le niveau des signaux E environnants est supérieur au seuil S de perturbation alors on passe à une étape 301 d'alerte explicitée ci-après.

Dès qu'un signal R de réponse correspondant à un signal 1 d'interrogation émis avec la première période T1 n'est pas reçu et que le niveau des signaux E environnants est inférieur au seuil S de perturbation, alors on passe à la deuxième procédure 210bis d'émission-réception. Cette deuxième procédure 210bis correspond à une phase de validation de la disparition.

En effet, dans cette deuxième procédure 210bis, on vérifie que le dispositif 102 identification est effectivement sorti de la zone Z de recherche. Pour effectuer cette vérification, les signaux I d'interrogation sont émis périodiquement, une deuxième période T2 plus petite que la première période T1 séparant deux émissions successives.

Tant qu'aucun signal R de réponse n'est détecté, on émet à nouveau des signaux I d'interrogation jusqu'à ce que le nombre de ces nouvelles émissions atteigne un nombre N. Si après la Nième émission, toujours aucun signal R de réponse n'est détecté par le dispositif 101 d'identification, la condamnation du véhicule peut être réalisée. En effet, aucun signal E environnant n'avait un niveau assez fort pour perturber la communication entre le dispositif 101 d'identification et le dispositif 103 identifiant. L'absence de signal de réponse correspond donc effectivement à une sortie du dispositif identifiant de la zone Z de recherche et les ouvrants du véhicule peuvent donc être condamnés.

Si N est grand, de l'ordre de 10, on se retrouve dans le cas d'un procédé de l'état de la technique avec une phase de validation longue. En revanche, si N est petit, de l'ordre de 3 ou 4, la phase de validation peut être avantageusement écourtée et on peut décider très rapidement de condamner le véhicule. En effet, à partir du moment où on détecte une disparition d'un dispositif 102 identifiant et que l'on sait qu'un environnement n'est pas bruité, il n'est pas nécessaire de répéter un grand nombre de fois une émission d'un signal I d'interrogation pour autoriser la condamnation. N peut d'ailleurs être nul mais le fait qu'il soit non nul et faible augmente la robustesse du procédé selon l'invention.

La majorité du temps, aucun signal E environnant extérieur ne perturbe la communication radiofréquence entre le dispositif 101 d'identification et le dispositif 103 identifiant. Le procédé selon l'invention permet donc un gain de temps non négligeable par rapport à un procédé qui, après chaque perte de communication entre dans une phase de validation longue comme dans l'état de la technique.

Par ailleurs, en évitant la majorité du temps d'émettre des signaux à basse périodicité durant une phase de validation longue, on évite un encombrement de la bande de fréquence sur laquelle sont émis les signaux I interrogation et les signaux R de réponse.

Si pendant la deuxième procédure 210bis d'émission-réception, on reçoit un signal R de réponse, alors, on retourne à la première procédure 210 d'émission-réception.

Si pendant la deuxième procédure 210bis d'émission-réception, on mesure un niveau des signaux E environnants supérieur au seuil S de perturbation pendant M2 émissions, alors on entre dans l'étape 301 d'alerte explicitée ci-dessous. Le nombre M2 d'émissions peut être différent ou égal au nombre M1. Dans la pratique, ces nombres M1 et M2 sont compris entre 5 et 10.

Dans l'étape 301 d'alerte, on réalise des fonctions autres qu'une condamnation immédiate du véhicule automobile 100. Ainsi dans cette étape 301, on peut décider d'abandonner, de suspendre ou de reprendre à son origine la procédure de condamnation des ouvrants du véhicule 100. On peut en outre signaler un problème de communication entre le dispositif 101 d'identification et le dispositif 102 identifiant à un utilisateur. Dans un exemple, cette signalisation peut être réalisée par un signal sonore et / ou visuel émis par le dispositif 102 identifiant et / ou le véhicule. Toutefois, dans cette étape d'alerte, on peut aussi décider de condamner le véhicule 100 de manière différée, après une temporisation donnée, de façon à éviter que le véhicule 100 ne reste ouvert.

Ainsi, grâce au procédé selon l'invention, si des signaux E environnants E peuvent avoir une influence sur une non réception des signaux R de réponses, on peut différer une prise de décision quant à la condamnation du véhicule.

Souvent, on détecte une disparition du dispositif 102 l'identifiant mais il est possible qu'un niveau des signaux E environnants supérieur au seuil S de perturbation ne permette jamais la détection de la disparition de ce dispositif 102 identifiant. Dans le cas où la disparition du dispositif 102 identifiant ne peut pas être détectée, on entre directement dans l'étape 301 d'alerte du procédé de condamnation.

Avec le procédé selon l'invention, la condamnation intempestive du véhicule liée à des signaux E environnants possédant une fréquence proche des signaux R de réponse d'identification est donc évitée.

Le procédé selon l'invention permet une auto-adaptation du procédé de condamnation en fonction des signaux E environnants. Cette auto-adaptation permet de prendre la décision de condamner les ouvrants du véhicule au plus tôt, tout en évitant une surcharge de la bande radio. En effet, avec l'invention, on évite l'entrée ou on réduit au plus l'étape systématique de validation réalisée par émission à faible périodicité des signaux I d'interrogation.

Dans une variante, une étape particulière non représentée d'émission à forte puissance peut être intercalée entre l'étape 210bis et l'étape 302. Dans cette étape particulière, des signaux I d'interrogation sont émis à une puissance plus forte que celle à laquelle sont émis ces signaux dans les procédures 210 et 210bis. Ainsi, ces signaux émis à forte puissance peuvent être détectés par le dispositif 102 identifiant dans une zone lointaine englobant la zone Z de recherche. Dans le cas où après une émission des signaux I d'interrogation à la deuxième puissance, un signal R de réponse est reçu, on valide la sortie du dispositif 102 identifiant de la zone Z de recherche. Les ouvrants du véhicule peuvent alors être condamnés automatiquement. Une antenne 103, telle que décrite dans le document EP-1099814, est capable d'émettre à plusieurs puissances d'émission.

Dans la pratique, les signaux I d'interrogation possèdent une porteuse d'une fréquence de l'ordre de125 Khz tandis que les signaux R de réponse possèdent une fréquence de porteuse de l'ordre de 433 Mhz. Les signaux I d'interrogation couvrent ainsi une zone limitée d'interrogation comprise entre 2 et 4 mètres autour du véhicule. En revanche, les signaux R de réponse sont plus pénétrants que les signaux I d'interrogation et couvrent une zone de réponse plus grande que la zone d'interrogation. Une arrivée des signaux I d'interrogation au dispositif d'identification est donc garantie. En variante, les fréquences des porteuses des signaux d'interrogation et de réponse sont identiques.

Les signaux d'interrogation et de réponse peuvent être échangés suivant une norme constructeur dédiée à une application particulière telle que la condamnation automatique ou suivant une norme internationale.

## Revendications

1. Procédé de condamnation automatique des ouvrants d'un véhicule (100) automobile équipé d'un système mains-libres comprenant un dispositif (101) d'identification situé sur le véhicule et un dispositif (102) identifiant portatif, le procédé comportant les étapes suivantes :
- on émet avec le dispositif d'identification des premiers signaux (I) d'interrogation électromagnétiques à destination du dispositif identifiant portatif, ces signaux étant détectables dans une zone (Z) donnée de recherche, puis
- on condamne les ouvrants du véhicule lorsque aucun signal (R) de réponse électromagnétique émis par le dispositif identifiant n'est détecté par le dispositif (101) d'identification,
**caractérisé en ce que**
- le dispositif (101) d'identification mesure un niveau de signaux (E) électromagnétiques environnants, et
- on décide de condamner ou non les ouvrants du véhicule en fonction de cette mesure.

2. Procédé selon la revendication 1 **caractérisé en ce que**
- on reçoit avec le dispositif d'identification (101) au moins un signal de réponse émis par le dispositif identifiant (102) lorsque ce dernier se trouve dans la zone de recherche,
- on détecte avec le dispositif d'identification (101) une disparition des signaux de réponse (R) électromagnétiques émis par le dispositif identifiant (102), et
- on décide de condamner ou non en fonction de cette détection de disparition.

3. Procédé selon l'une des revendications 1 à 2 **caractérisé en ce que**
- on compare le niveau des signaux électromagnétique (R) à un seuil (S) de perturbation,
- on teste si le niveau des signaux électromagnétiques environnants (E) est inférieur au seuil de perturbation (S) et, le cas échéant,
- on condamne automatiquement le véhicule.

4. Procédé selon la revendication 3 **caractérisé en ce que**, avant de condamner, on émet à nouveau (N) des signaux d'interrogation (1) électromagnétiques.

5. Procédé selon l'une des revendications 3 à 4 **caractérisé en ce que**:
- on teste si le niveau des signaux électromagnétiques environnants (E) est supérieur au seuil de perturbation (S) et, le cas échéant,
- on suspend ou on abandonne ou on recommence la procédure de condamnation ou on condamne de manière différée les ouvrants du véhicule.

6. Procédé selon la revendication 5 **caractérisé en ce que**, avant de suspendre, d'abandonner ou de recommencer la procédure de condamnation ou de condamner de manière différée les ouvrants du véhicule, on émet à nouveau les signaux d'interrogation (1) électromagnétiques.

7. Procédé selon l'une des revendications 1 à 6 **caractérisé en ce que** l'on mesure le niveau des signaux environnants (E) en dehors d'une période (TA, TD) d'émission.

## Claims

1. Automatic locking process for the openings of a motor vehicle (100) equipped with a hands-free system comprising an identification device (101) located on the vehicle and a portable identifying device (102). The process encompasses the following steps:
- with the identification device, initial electromagnetic interrogation signals (I) are emitted for the portable identifying device as these signals are detectable within a given search zone (Z), then
- the openings of the vehicle are locked when no electromagnetic response signal (R) emitted by the identifying device is detected by the identification device (101),
**characterised in that**
- the identification device (101) measures a level of surrounding electromagnetic signals (E), and
- based on this measure, it is determined whether or not the openings of the vehicle are to be locked.

2. Process according to claim 1 **characterised in that**
- with the identification device (101) at least one response signal emitted by the identifying signal (102) is received when the latter is within the search zone,
- with the identification device (101) a loss of electromagnetic response signals (R) emitted by the identifying device (102) is detected, and
- based on this detection of loss, it is determined whether locking should take place or not.

3. Process according to claims 1 to 2 **characterised in that**
- the level of electromagnetic signals (R) is compared to a disturbance limit (S),
- the level of surrounding electromagnetic signals is tested to determine if it is lower than the disturbance limit (S) and, if necessary,
- the vehicle is automatically locked.

4. Process according to claim 3 **characterised in that**, before locking, electromagnetic interrogation signal are once again (N) emitted.

5. Process according to one of the claims 3 to 4 **characterised in that**:
- the level of surrounding electromagnetic signals is tested to determine if it is higher than the disturbance limit (S) and, if necessary,
- the locking process is suspended or abandoned or restarted, or the openings of the vehicle are locked in a delayed manner.

6. Process according to claim 5 **characterised in that**, before suspending, abandoning or restarting the locking procedure, or locking the openings of the vehicle in a delayed manner, electromagnetic interrogation signals (I) are once again emitted.

7. Process according to one of the claims 1 to 6 **characterised in that** the level of surrounding signals (E) is measured outside an emission period (TA, TD).

## Patentansprüche

1. Verfahren zum automatischen Verriegeln der Klappen bzw. Türen eines Kraftfahrzeugs (100), das mit einem Freihand-System ausgestattet ist, das eine Identifikationsvorrichtung (101), die am Fahrzeug angeordnet ist, und eine tragbare Identifiziervorrichtung (102) umfasst, wobei das Verfahren folgende Schritte aufweist:
- mit der Identifiziervorrichtung werden erste elektromagnetische Abfragesignale (1) zur tragbaren Identifiziervorrichtung gesendet, wobei diese Signale in einem vorgegebenen Suchbereich (Z) erfassbar sind, anschließend
- werden die Klappen bzw. Türen des Fahrzeugs verriegelt, wenn kein von der Identifiziervorrichtung gesendetes elektromagnetisches Antwortsignal (R) durch die Identifikationsvorrichtung (101) erfasst wird,
**dadurch gekennzeichnet, dass**
- die Identifikationsvorrichtung (101) einen Pegel von elektromagnetischen Umgebungssignalen (E) misst, und
- in Abhängigkeit von dieser Messung beschlossen wird, die Klappen bzw. Türen des Fahrzeugs zu verriegeln oder nicht.

2. Verfahren nach Anspruch 1, **dadurch gekennzeichnet, dass**
- mit der Identifikationsvorrichtung (101) mindestens ein durch die Identifiziervorrichtung (102) gesendetes Antwortsignal empfangen wird, wenn sich diese im Suchbereich befindet,
- mit der Identifikationsvorrichtung (101) ein Verschwinden der durch die Identifiziertvorrichtung (102) gesendeten elektromagnetischen Antwortsignale (R) erfasst wird, und
- in Abhängigkeit von dieser Erfassung eines Verschwindens beschlossen wird zu verriegeln oder nicht.

3. Verfahren nach Anspruch 1 oder 2, **dadurch gekennzeichnet, dass**
- der Pegel der elektromagnetischen Umgebungssignale (R) mit einer Störschwelle (S) verglichen wird,
- getestet wird, ob der Pegel der elektromagnetischen Umgebungssignale (E) unter der Störschwelle (S) liegt, und gegebenenfalls
- das Fahrzeug automatisch verriegelt wird.

4. Verfahren nach Anspruch 3, **dadurch gekennzeichnet, dass** bevor verriegelt wird, erneut (N) elektromagnetische Abfragesignale (1) gesendet werden.

5. Verfahren nach einem der Ansprüche 3 bis 4, **dadurch gekennzeichnet, dass**
- getestet wird, ob der Pegel der elektromagnetischen Umgebungssignale (E) über der Störschwelle (S) liegt, und gegebenenfalls
- das Verriegeln aufgehoben, aufgegeben oder wiederholt wird oder die Klappen bzw. Türen des Fahrzeugs in unterschiedlicher Weise verriegelt werden.

6. Verfahren nach Anspruch 5, **dadurch gekennzeichnet, dass** bevor das Verriegeln aufgehoben, aufgegeben oder wiederholt wird oder die Klappen bzw. Türen des Fahrzeugs in unterschiedlicher Weise verriegelt werden, die elektromagnetischen Abfragesignale (1) erneut gesendet werden.

7. Verfahren nach einem der Ansprüche 1 bis 6, **dadurch gekennzeichnet, dass** der Pegel der elektromagnetischen Umgebungssignale (E) außerhalb einer Sendeperiode (TA, TD) gemessen wird.
